# EUROPEAN PATENT APPLICATION

(11) **EP 2 713 273 A2**
(43) Date of publication of application: **02.04.2014**
(21) Application number: 13181153.1
(22) Date of filing: 21.08.2013
(51) Int. Cl.: G06F 11/07

(54) **Information processing apparatus and fault processing method for information processing apparatus**

(30) Priority: 30.08.2012 JP 2012189684
(71) Applicant: FUJITSU LIMITED, Kawasaki-shi, Kanagawa 211-8588 (JP)
(72) Inventor: Matsuura, Tsutomu, Kanagawa, 211-8588 (JP); Horiuchi, Toshihiro, Kanagawa, 211-8588 (JP); Fujioka, Shuntaro, Kanagawa, 211-8588 (JP)
(74) Representative: HOFFMANN EITLE

(57) **Abstract**

An information processing apparatus includes a processing apparatus (10), a bus bridge (21) connected to the processing apparatus (10) through a first bus (50) and connecting to a peripheral apparatus (31, 30), a nonvolatile storage apparatus (233) that stores information relating to a fault occurring in the peripheral apparatus or the bus bridge, a monitoring apparatus (40) connected to the nonvolatile storage apparatus (233) through a second bus (60) different from the first bus (50) and monitoring a system including the processing apparatus, and a fault notification unit (23, 231) that stores, when the fault occurs in the peripheral apparatus or the bus bridge, the information relating to the occurring fault into the nonvolatile storage apparatus (233) and issues a notification of an error to the monitoring apparatus (40) through the second bus (60). By the information processing apparatus, fault information of the peripheral apparatus and the bus bridge is acquired with certainty.

## Description

### FIELD

The embodiments discussed herein are directed to an information processing apparatus and a fault processing method for an information processing apparatus

### BACKGROUND

An OS (Operating System) operating in a server issues an I/O (Input/Output) instruction to a peripheral apparatus such as an I/O device through a serial or parallel internal bus. If no response to the I/O instruction is received upon polling through the internal bus in accordance with the I/O instruction and then timeout is detected, then it is recognized that a fault has occurred in an I/O device, a bus bridge connected to the I/O device or the like. In this instance, since a suspect location cannot be identified, replacement of an entire location including the I/O device, bus bridge and so forth in which a fault has not occurred is performed as maintenance work.

In order to identify a suspect location that is a location to be replaced in maintenance work, it is necessary to acquire detailed fault information (error information) in the I/O device, bus bridge or the like. Therefore, it seems advisable to extract a server detailed fault information and so forth from the I/O device, bus bridge or the like through the internal bus. However, for example, if a fault occurs in a path of the internal bus, then there is the possibility that fault information and so forth may not be read out. Therefore, such a countermeasure as to issue a notification of fault information and so forth of an apparatus connected to the bus bridge to a maintenance diagnosis apparatus through a path (diagnosis bus or the like) different from the internal bus is taken.
[Patent Document 1] Japanese Laid-Open Patent Publication No. 2009-223584
[Patent Document 2] Japanese Laid-Open Patent Publication No. 2009-217435
[Patent Document 3] Japanese Laid-Open Patent Publication No. Hei 11-259383
[Patent Document 4] Japanese Laid-Open Patent Publication No. Hei 10-254736

However, also when a notification of fault information and so forth is issued to the maintenance diagnosis apparatus through a path different from the internal bus, if the different path is configured from a low-speed bus such as, for example, an I2C (Inter-Integrated Circuit) bus, then there is the possibility that, when a plurality of faults occur or in a like case, transmission of fault information may result in failure and the fault information maybe lost. If the fault information is lost in this manner, then when maintenance work is performed, a suspect location cannot be identified and it becomes necessary to replace the entire location including the I/O device, bus bridge and so forth in which a fault does not occur.

### SUMMARY

It is an object of the present invention to acquire fault information of a peripheral apparatus, a bus bridge and so forth with certainty.

In one scheme, an information processing apparatus includes a processing apparatus, a bus bridge connected to the processing apparatus through a first bus and connecting to a peripheral apparatus, a nonvolatile storage apparatus that stores information relating to a fault occurring in the peripheral apparatus or the bus bridge, a monitoring apparatus connected to the nonvolatile storage apparatus through a second bus different from the first bus and monitoring a system including the processing apparatus, and a fault notification unit that stores, when the fault occurs in the peripheral apparatus or the bus bridge, the information relating to the occurring fault into the nonvolatile storage apparatus and issues a notification of an error to the monitoring apparatus through the second bus.

According to the embodiment, fault information of a peripheral apparatus and a bus bridge is acquired with certainty.

### BRIEF DESCRIPTION OF THE DRAWINGS

FIG. 1 is a block diagram depicting a general configuration of an information processing apparatus according to a present embodiment;
FIG. 2 is a block diagram depicting a detailed configuration of a PCI box in the information processing apparatus depicted in FIG. 1;
FIG. 3 is a flow chart illustrating operation of a server in the information processing apparatus depicted in FIG. 1;
FIG. 4 is a flow chart illustrating operation of an I2C controller (fault notification unit) in the PCI box depicted in FIG. 2;
FIG. 5 is a flow chart illustrating operation of a system controlling apparatus (monitoring apparatus) in the information processing apparatus depicted in FIG. 1; and
FIGS. 6 to 12 are flow charts illustrating a particular maintenance work procedure using the information processing apparatus according to the present embodiment.

### DESCRIPTION OF THE PREFERRED EMBODIMENTS

In the following, embodiments are described with reference to the drawings.

### [1] Configuration of the Information Processing Apparatus of the Present Embodiment

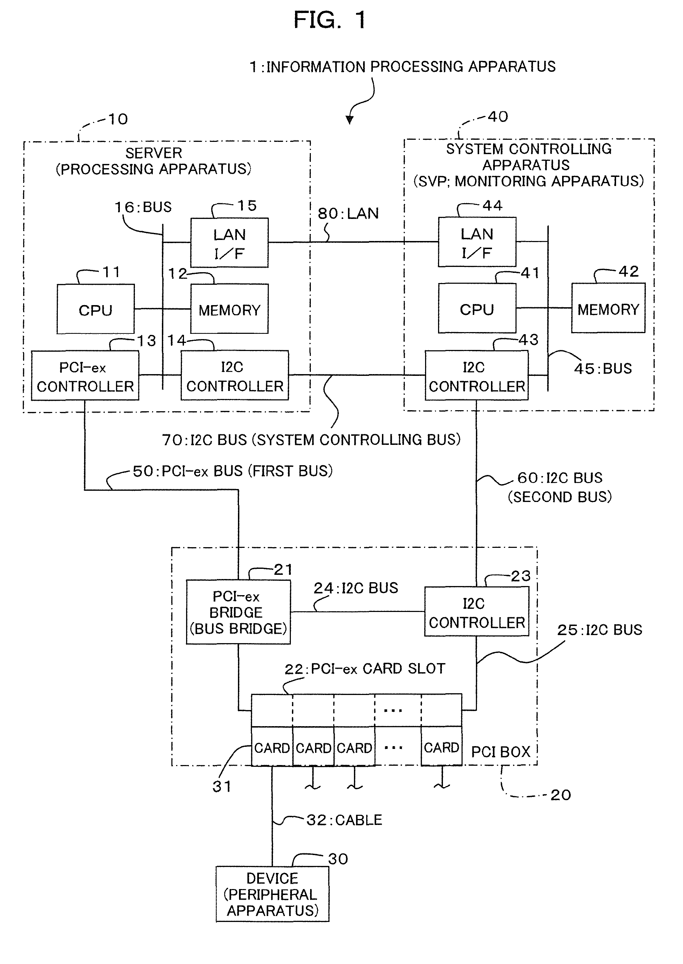

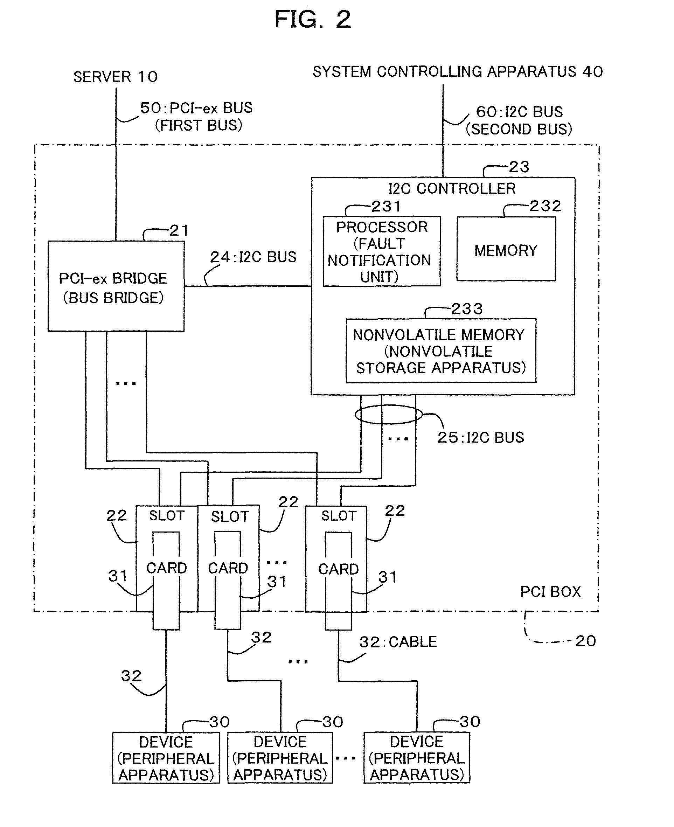

First, a configuration of the information processing apparatus 1 of the present embodiment is described with reference to FIGS. 1 and 2. Here, FIG. 1 is a block diagram depicting a general configuration of the information processing apparatus 1 of the present embodiment, and FIG. 2 is a block diagram depicting a detailed configuration of a PCI (Peripheral Components Interconnect) box 20 in the information processing apparatus 1 depicted in FIG. 1. As depicted in FIG. 1, the information processing apparatus 1 includes a server 10, a PCI box 20, a device 30 and a system controlling apparatus 40.

### [1-1] Configuration of the Server (Processing Apparatus)

The server (processing apparatus) 10 is a universal computer configured such that a CPU (Central Processing Unit) 11, a memory 12, a PCI-ex (PCI-express) controller 13, an I2C controller 14 and a LAN (Local Area Network) interface unit 15 are communicably connected to each other through a bus 16.

The CPU 11 reads out and executes programs stored in the memory 12 to perform various functions hereinafter described.

The memory 12 is, for example, a RAM (Random Access Memory), a ROM (Read Only Memory), an HDD (Hard Disk Drive), an SSD (Solid State Drive) or the like provided in an apparatus main body of the server 10.

The PCI-ex controller 13 functions as an interface to a PCI-ex bus (internal bus; first bus) 50 and is connected for communication to the PCI box 20 hereinafter described having a housing different from a housing of the server 10 through the PCI-ex bus 50.

The I2C controller 14 functions as an interface to an I2C bus (system controlling bus; second bus) 70 and is connected for communication to the system controlling apparatus 40 hereinafter described through the I2C bus 70.

The LAN interface unit 15 functions as an interface to a LAN 80 and is connected for communication to the system controlling apparatus 40 hereinafter described through the LAN 80.

An OS that operates in the CPU 11 (server 10) has a function of issuing an I/O instruction for a peripheral apparatus (device 30 hereinafter described) such as an I/O device through the PCI-ex controller 13 and the PCI-ex bus 50.

If an error response (second response) or an interrupt (second interrupt) indicating that a fault occurs in the PCI box 20 side hereinafter described is received through the PCI-ex bus 50 when an I/O access to the peripheral apparatus (device 30 hereinafter described) is performed, then the CPU 11 (OS) performs such functions as described below. In particular, the CPU 11 (OS) performs a function of performing a fault analysis (second fault analysis; identification of a suspect location in which a fault has occurred) based on information (fault information, error information) included in the error response or the interrupt. Then, the CPU 11 performs a function of notifying the system controlling apparatus 40 hereinafter described of a result of the second fault analysis through the LAN interface unit 15 and the LAN 80 and logging the result of the second fault. The logging is performed not only into the memory 12 in the server 10 but also into a memory 42 (hereinafter described) in the system controlling apparatus 40 hereinafter described.

Further, when no response is received from the PCI-ex bus 50 and timeout occurs upon the I/O access to the peripheral apparatus (device 30 hereinafter described), the CPU 11 (OS) performs such functions as described below. In particular, the CPU 11 (OS) performs a function of recognizing an error of the PCI box 20 (all elements included in the PCI box 20) hereinafter described. Then, the CPU 11 performs a function of notifying the system controlling apparatus 40 hereinafter described of a result of the recognition through the LAN interface unit 15 and the LAN 80 and performing logging of the result of the recognition. The logging is performed not only into the memory 12 in the server 10 but also into a memory 42 (hereinafter described) in the system controlling apparatus 40 hereinafter described.

### [1-2] Configuration of the PCI Box

The PCI box 20 has a housing different from that of the server 10 and is connected to the server 10 through the PCI-ex bus 50. The PCI box 20 includes a PCI-ex bridge 21, a PCI-ex card slot 22 and an I2C controller 23.

The PCI-ex bridge (bus bridge) 21 is connected to the server 10 through the PCI-ex bus 50 and is coupled with the PCI-ex card 31 by the PCI-ex card slot 22. The PCI box 20 has a plurality of PCI-ex card slots 22 configured such that a PCI-ex card 31 can be inserted into the individual PCI-ex card slots 22. By inserting the PCI-ex card 31 into each of the PCI-ex card slots 22, the PCI-ex card 31 is stored into the PCI box 20. The PCI-ex card 31 is connected to the device (peripheral apparatus) 30 such as an HDD, a LAN switch or a hub through a cable 32. Consequently, the server 10 can issue an I/O access to the device 30 through the PCI-ex bus 50, PCI-ex bridge 21, PCI-ex card slot 22, PCI-ex card 31 and cable 32.

The PCI-ex bridge 21 and the PCI-ex card 31 (device 30) individually have a function of issuing, when a fault occurs, a notification of an error response (first response) or an interrupt (first interrupt) indicating that a fault has occurred with the I2C controller 23 through I2C buses 24 and 25.

The I2C controller (fault notification unit) 23 performs transmission and reception (error notification, collection of error information (fault information), control relating to power supply and so forth) of information relating to system control between the system controlling apparatus 40 hereinafter described and the PCI box 20. Therefore, the I2C controller 23 is connected to the system controlling apparatus 40 hereinafter described through an I2C bus (second bus) 60 different from the PCI-ex bus (first bus) 50. Further, the I2C controller 23 is connected to the PCI-ex bridge 21 through the I2C bus 24 and is connected to the PCI-ex card 31 (device 30) inserted in the PCI-ex card slot 22 through the I2C bus 25 and the PCI-ex card slot 22. Here, the I2C is communication means that can be utilized with a low cost although the speed is low in comparison with the PCI.

Further, as depicted in FIG. 2, the I2C controller 23 includes a processor 231, a memory 232 and a nonvolatile memory 233.

The processor 231 reads out and executes a program stored in the memory 232 and functions as a fault notification unit hereinafter described. The memory 232 is, for example, a RAM, a ROM, an HDD, an SSD or the like.

The nonvolatile memory (nonvolatile storage apparatus; flash memory) 233 is controlled by the processor 231 and stores information (hereinafter referred to as "fault information" or "error information") relating to a fault occurring in any of the components of the PCI box 20. Here, the components of the PCI box 20 include the PCI-ex bridge 21, PCI-ex card 31 and device 30 described above. Further, the fault information (error information) is retained as registration information in registers of the PCI-ex bridge 21, PCI-ex card 31 and device 30 and includes information such as a part identifier, an error state and so forth. The fault information (error information) is used for an error analysis by the system controlling apparatus 40.

It is to be noted that the nonvolatile memory 233 is removably attached to the PCI box 20 (I2C controller 23) . Accordingly, the nonvolatile memory 233 can be removed from the PCI box 20 and attached to a different processing apparatus as occasion demands so that fault information accumulated in the nonvolatile memory 233 can be used for a fault analysis by the different processing apparatus.

The processor (fault notification unit) 231 performs a function of reading out, when an error response (first response) or an interrupt (first interrupt) is received from a component in which a fault has occurred through the I2C buses 24 and 25, register information (fault information) from the component in which the fault has occurred through the I2C buses 24 and 25 and accumulating the read out information into the nonvolatile memory 233. Further, the processor 231 performs a function of accumulating the fault information into the nonvolatile memory 233 and issuing a notification of an error to the system controlling apparatus 40 through the I2C bus (second bus) 60.

Further, the processor (fault notification unit) 231 performs a function of transmitting, where a readout request of the fault information of the nonvolatile memory 233 is received from the system controlling apparatus 40 through the I2C bus 60, the fault information stored in the nonvolatile memory 233 to the system controlling apparatus 40 through the I2C bus 60.

Further, the processor (fault notification unit) 231 performs a function of transmitting, where access (hereinafter described) for an alive check is received from the system controlling apparatus 40, register information (error information where a fault occurs) indicating a state of the I2C controller 23 and so forth to the system controlling apparatus 40 through the I2C bus 60.

### [1-3] Configuration of System Controlling Apparatus (monitoring apparatus)

The system controlling apparatus 40 is an SVP (SerVice Processor) for performing monitoring of the system including the server 10 and the PCI box 20 and is connected to the server 10 and the PCI box 20 through the I2C buses 70 and 60 as system controlling buses, respectively.

Further, as depicted in FIG. 1, the system controlling apparatus 40 is configured by connecting a CPU 41, the memory 42, an I2C controller 43 and a LAN interface unit 44 to each other for communication through a bus 45.

The CPU 41 reads out and executes a program stored in the memory 42 to perform various functions hereinafter described. The memory 42 is, for example, a RAM, a ROM, an HDD, an SSD or the like.

The I2C controller 43 functions as an interface to the I2C buses 70 and 60 and is connected for communication to the server 10 (I2C controller 14) and the PCI box 20 (I2C controller 23) through the I2C buses 70 and 60, respectively.

The LAN interface unit 44 functions as an interface to the LAN 80 and is connected for communication to the server 10 (LAN interface unit 15) through a LAN 80.

The CPU 41 (system controlling apparatus 40) performs such functions as described below.

If a notification of an error is received from the I2C controller 23 of the PCI box 20, then the CPU 41 reads out fault information stored in the nonvolatile memory 233 through the I2C bus 60 and performs a fault analysis (first fault analysis; identification of a suspect location in which a fault has occurred) based on the read-out fault information. Then, the CPU 41 performs a function of issuing a notification of a result of the first fault analysis to the operator and performing logging of the result of the first fault analysis into the memory 42.

It is to be noted that the notification of a result of the first fault analysis is performed to the operator using a monitor or the like in the system controlling apparatus 40, and the operator who refers to the notification would perform maintenance work such as part replacement for a suspect location as hereinafter described.

At this time, when both of a result of the first fault analysis obtained based on the fault information of the nonvolatile memory 233 of the PCI box 20 and a result of the second fault analysis received as a notification from the server 10 through the LAN 80 are obtained, the CPU 41 issues a notification of a result of the first fault analysis in priority to the operator.

If no response is received from the PCI-ex bus 50 when the server 10 performs an I/O access to the device 30, then the CPU 41 reads out fault information stored in the nonvolatile memory 233 through the I2C bus 60 and performs a fault analysis (first fault analysis; identification of a suspect location in which a fault has occurred) based on the read-out fault information. Then, the CPU 41 performs a function of issuing a notification of a result of the first fault analysis to the operator and logging the result of the first fault analysis into the memory 42.

The CPU 41 has a function of periodically or non-periodically performing an access for an alive check to the I2C controller 23 of the PCI box 20 in order to monitor the PCI box 20. The alive check is a check process performed for checking whether or not the I2C controller 23 is operating normally. It is to be noted that, while the CPU 41 performs an access for an alive check also to the I2C controller 14 of the server 10 in order to monitor the server 10, detailed description of the access is omitted here.

If error information indicating that a fault has occurred is received from the I2C controller 23 when an access to the I2C controller 23 of the PCI box 20 is performed, then the CPU 41 performs a fault analysis (third fault analysis) based on the received error information. Then, the CPU 41 performs a function of issuing a notification of a result of the third fault analysis to the operator and logging the result of the third fault analysis into the memory 42.

If no response is received from the I2C controller 23 when an access to the I2C controller 23 of the PCI box 20 is performed and timeout occurs, then the CPU 41 recognizes that a fault has occurred in the I2C controller 23. In particular, the CPU 41 performs a function of recognizing all elements included in the I2C controller 23 as suspect locations and then issuing a notification of the fact to the operator and logging the fact into the memory 42.

If the fault is resolved by replacing the I2C controller 23 with a new one after the notification of the fact that a fault has occurred in the I2C controller 23, then the CPU 41 performs a function of determining the I2C controller 23 as a suspect location and then issuing a notification of the fact to the operator and logging the fact into the memory 42.

On the other hand, if no fault is resolved even if the I2C controller 23 is replaced after the notification of the fact that a fault has occurred in the I2C controller 23, the CPU 41 recognizes the components connected to the I2C controller 23 as suspect locations. In particular, the CPU 41 performs a function of recognizing all of the components on the PCI box 20 side except for the I2C controller 23 as suspect locations and then issuing a notification of the fact to the operator and logging the fact into the memory 42.

### [2] Operation of the Information Processing Apparatus of the Present Embodiment

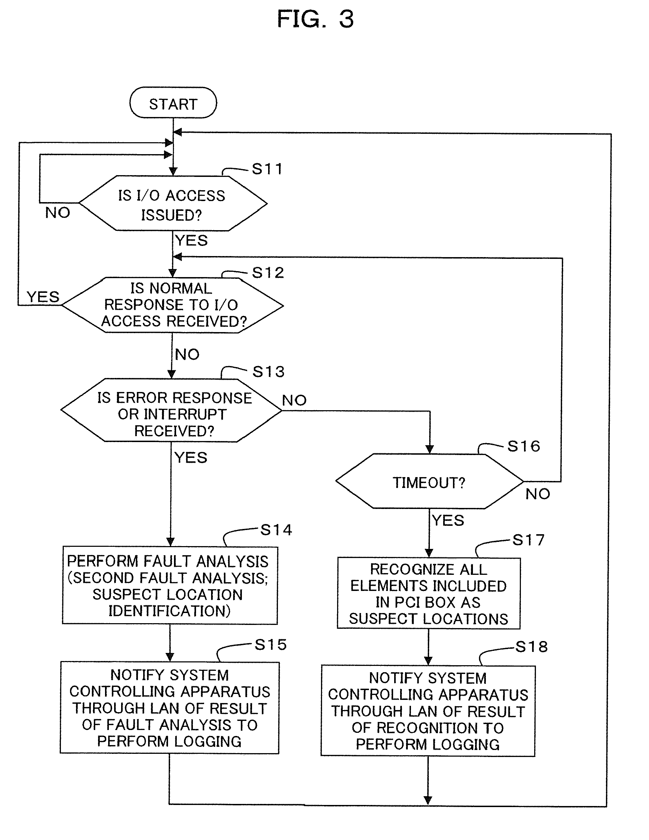

Now, operation of the server 10, operation of the I2C controller 23 (fault notification unit 231) of the PCI box 20 and operation of the system controlling apparatus 40 (CPU 41) in the information processing apparatus of the present embodiment configured in such a manner as described above are described with reference to FIGS. 3 to 5.

### [2-1] Operation of the Server

Operation of the server 10 (CPU 11) in the information processing apparatus 1 depicted in FIG. 1 is described with reference to the flow chart (steps S11 to S18) depicted in FIG. 3.

If an I/O access to the device 30 is issued (YES route at step S11), then the CPU 11 decides whether or not a normal response to the issued I/O access is received (step S12). If a normal response to the I/O access is received (YES route at step S12), then the CPU 11 returns the processing to step S11 to wait issuance of an I/O access.

On the other hand, if no normal response to the I/O access is received (NO route at step S12), then the CPU 11 decides whether or not an error response or an interrupt indicating that a fault has occurred on the PCI box 20 side is received through PCI-ex bus 50 (step S13). If an error response or an interrupt is received (YES route at step S13), then the CPU 11 performs a fault analysis (second fault analysis) based on fault information included in the error response or the interrupt to identify a suspect location in which a fault has occurred (step S14). Then, the CPU 11 issues a notification of a result of the fault analysis to the system controlling apparatus 40 through the LAN interface unit 15 and the LAN 80 andperforms logging of the fault analysis result (step S15), and then returns the processing to step S11.

Further, the CPU 11 decides whether or not timeout (lapse of predetermined time) occurs without receiving a normal response or an error response/interrupt to the I/O access (NO route at step S13) (step S16). If timeout does not occur (NO route at step S16), then the CPU 11 returns the processing to step S12. On the other hand, if timeout occurs (YES route at step S16), then the CPU 11 recognizes all elements included in the PCI box 20 as suspect locations (step S17). Then, the CPU 11 issues a notification of a result of the recognition to the system controlling apparatus 40 through the LAN interface unit 15 and the LAN 80 and performs logging of the recognition result (step S18), and then returns the processing to step S11.

### [2-2] Operation of the Fault Notification Unit

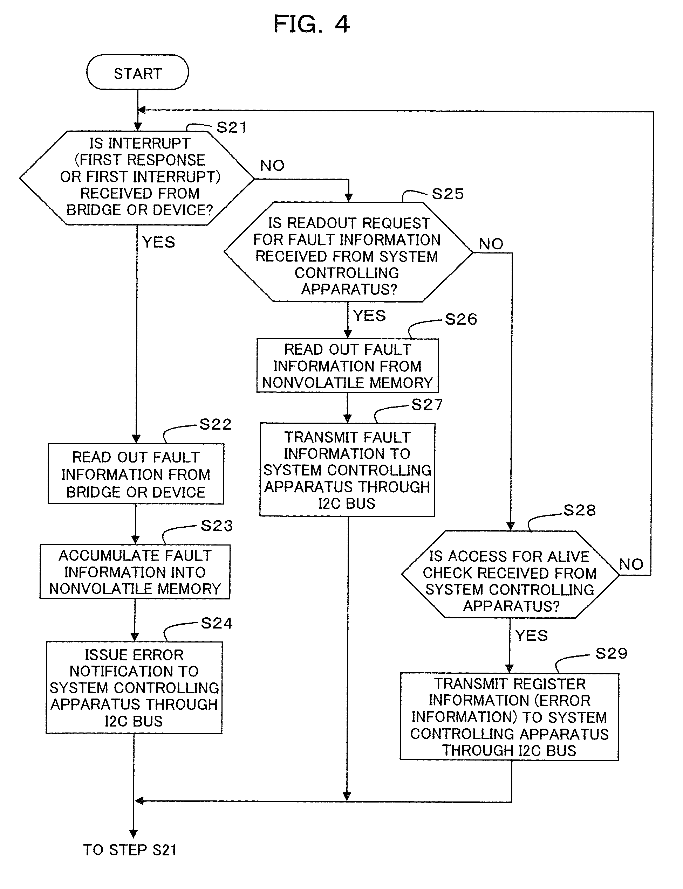

Operation of the I2C controller 23 (fault notification unit 231) in the PCI box 20 depicted in FIG. 2 is described with reference to the flow chart (steps S21 to S29) depicted in FIG. 4.

The fault notification unit 231 decides whether or not an error response or an interrupt indicating that a fault has occurred is received from the PCI-ex bridge 21 or the PCI-ex card 31 (device 30), which is a component of the PCI box 20, through the I2C buses 24 and 25 (step S21). If an error response or an interrupt is received (YES route at step S21), then the fault notification unit 231 reads out register information (fault information) from the component, in which a fault has occurred, through the I2C buses 24 and 25 and accumulates the read out information into the nonvolatile memory 233 (steps S22 and S23). Then, the fault notification unit 231 issues a notification of the error to the system controlling apparatus 40 through the I2C bus 60 (step S24), and returns the processing to step S21.

On the other hand, if an error response or an interruption is not received (NO route at step S21), then the fault notification unit 231 decides whether or not a readout request for fault information is received from the system controlling apparatus 40 through the I2C bus 60 (step S25). Here, the readout request for fault information is issued from the system controlling apparatus 40 (CPU 41) in response to an error of a notification issued from the fault notification unit 231. If the readout request for fault information in the nonvolatile memory 233 is received from the system controlling apparatus 40 through the I2C bus 60 (YES route at step S25), then the fault notification unit 231 reads out and transmits the fault information stored in the nonvolatile memory 233 to the system controlling apparatus 40 through the I2C bus 60 (steps S26 and S27), and returns the processing to step S21.

If a readout request for fault information in the nonvolatile memory 233 is not received (NO route at step S25), then the fault notification unit 231 decides whether or not an access for an alive check from the system controlling apparatus 40 is received (step S28). If an access for an alive check from the system controlling apparatus 40 is received (YES route at step S28), then the fault notification unit 231 transmits register information (error information) indicating a state of the I2C controller 23 and so forth to the system controlling apparatus 40 through the I2C bus 60 (step S29), and returns the processing to step S21. It is to be noted that, if an access for an alive check from the system controlling apparatus 40 is not received (NO route at step S28), then the fault notification unit 231 returns the processing to step S21.

### [2-3] Operation of the System Controlling Apparatus (Monitoring Apparatus)

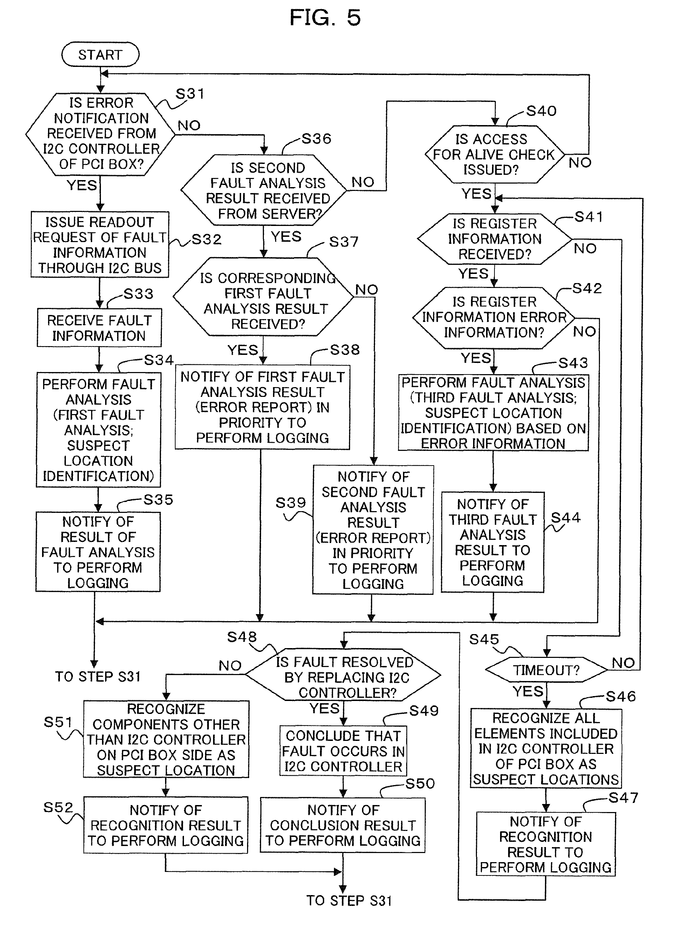

Operation of the system controlling apparatus 40 (CPU 41) in the information processing apparatus 1 depicted in FIG. 1 is described with reference to the flow chart (steps S31 to S52) depicted in FIG. 5.

The CPU 41 decides whether or not a notification of an error is received from the I2C controller 23 of the PCI box 20 through the I2C bus 60 (step S31). If a notification of an error is received from the I2C controller 23 of the PCI box 20 (YES route at step S31), then the CPU 41 issues a readout request for fault information stored in the nonvolatile memory 233 through the I2C bus 60 (step S32). If fault information from the nonvolatile memory 233 is received after a readout request is issued (step S33), then the CPU 41 performs a fault analysis (first fault analysis) based on the read out fault information to identify a suspect location in which a fault has occurred (step S34). Then, the CPU 41 issues a notification of a result of the first fault analysis to the operator and logs the result of the first fault analysis into the memory 42 (step S35), and then returns the processing to step S31.

If a notification of an error is not received from the I2C controller 23 of the PCI box 20 (NO route at step S31), then the CPU 41 decides whether or not a result of a second fault analysis is received from the server 10 through the LAN 80 (step S36). If a result of a second fault analysis is received from the server 10 (YES route at step S36), then the CPU 41 decides whether or not a result of a first fault analysis corresponding to the second fault analysis is acquired by the CPU 41 (step S37). If a result of a first fault analysis corresponding to the second fault analysis is acquired (YES route at step S37), then the CPU 41 issues a notification of the result of the first fault analysis in priority to the operator and logs the result of the first fault analysis into the memory 42 (step S38), and then returns the processing to step S31. On the other hand, if a result of the first fault analysis corresponding to the second fault analysis is not acquired (NO route at step S37), then the CPU 41 issues a notification of the result of the second fault analysis in priority to the operator and logs the result of the second fault analysis into the memory 42 (step S39), and then returns the processing to step S31. It is to be noted that a result of the first fault analysis is obtained by the CPU 41 performing a fault analysis based on the fault information in the nonvolatile memory 233 of the PCI box 20. Further, the result of the second fault analysis is a result of the fault analysis performed by the server 10 and issued as a notification from the server 10 through the LAN 80 as described above.

If a result of the second fault analysis is not received from the server 10 (NO route at step S36), then the CPU 41 decides whether or not an access for an alive check is issued to the I2C controller 23 of the PCI box 20 (step S40). If an access for an alive check is not issued (NO route at step S40), then the CPU 41 returns the processing to step S31.

If an access for an alive check is issued to the PCI box 20 (YES route at step S40), then the CPU 41 decides whether or not register information is received from the I2C controller 23 through the I2C bus 60 in response to the access (step S41). If the register information is received (YES route at step S41), then the CPU 41 decides whether or not the received register information is error information (step S42). Then, if the received register information is not error information (NO route at step S42), then the processing returns to step S31. On the other hand, if the received register information is error information (YES route at step S42), then the CPU 41 performs a fault analysis (third fault analysis) based on the error information to identify a suspect location in which a fault has occurred (step S43). Then, the CPU 41 issues a notification of a result of the third fault analysis to the operator and logs the result of the third fault analysis into the memory 42 (step S44), and returns the processing to step S31.

If the register information is not received (NO route at step S41), then the CPU 41 decides whether or not timeout (lapse of a predetermined time period) occurs without receiving a response from the I2C controller 23 (step S45) . If timeout does not occur (NO route at step S45), then the CPU 41 returns the processing to step S41. On the other hand, if timeout occurs (YES route at step S45), then the CPU 41 recognizes all elements included in the I2C controller 23 of the PCI box 20 as suspect locations (step S46). Then, the CPU 41 issues a notification of the result of the recognition to the operator and logs the recognition result into the memory 42 (step S47).

Thereafter, the CPU 41 decides whether or not the fault is resolved by replacing the I2C controller 23 with a different one after a notification that a fault has occurred in the I2C controller 23 is issued (step S48). If the fault is resolved (YES route at step S48), then the CPU 41 determines the I2C controller 23 as a suspect location (step S49). Then, the CPU 41 issues a notification of the fact to the operator and logs the fact into the memory 42 (step S50), and then returns the processing to step S31. On the other hand, if the fault is not resolved (NO route at step S48), then the CPU 41 recognizes all components on the PCI box 20 side except for the I2C controller 23 as suspect locations (step S51). Then, the CPU 41 issues a result of the recognition to the operator and logs the recognition result into the memory 42 (step S52), and then returns the processing to step S31.

### [3] Particular Maintenance Work Procedure using the Information Processing Apparatus of Present Embodiment

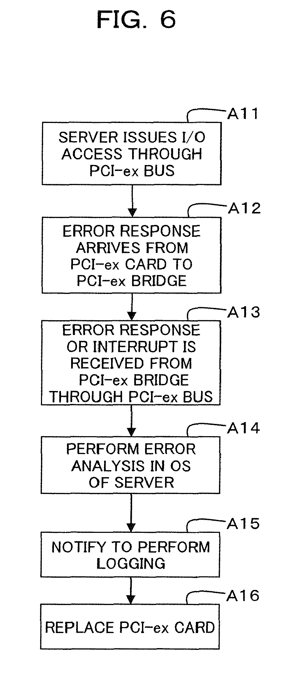

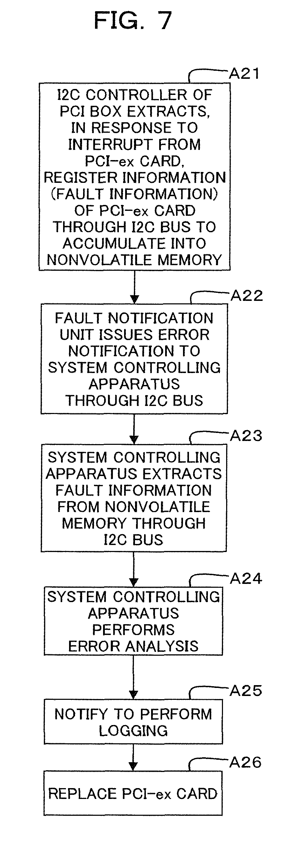

Now, a particular maintenance work procedure using the information processing apparatus 1 of the present embodiment is described with reference to FIGS. 6 to 12. It is to be noted that FIGS. 6 to 12 are flow charts illustrating a particular maintenance work procedure using the information processing apparatus 1 of the present embodiment.
[3-1] First, a particular maintenance work procedure when an error response or an interrupt is returned from the PCI box 20 when the server 10 performs an I/O access and a fault occurring location (suspect location) is the PCI-ex card 31 (or the device 30 connected to the PCI-ex card 31) is described with reference to FIGS. 6 and 7.

FIG. 6 is a flow chart illustrating operation/procedure (steps A11 to A16) relating to the server 10, and illustrates operation/procedure when a result of a fault analysis performed based on fault information in the nonvolatile memory 233 is not acquired but another result of a fault analysis by the server 10 is acquired by the system controlling apparatus 40 side.

Step A11: If an OS operating in the server 10 (CPU 11) issues an I/O access, then an I/O access command is issued through the PCI-ex bus 50 in accordance with the issuance of the I/O access.

Step A12: Since a fault occurs in the PCI-ex card 31, an error response arrives from the PCI-ex card 31 at the PCI-ex bridge 21 of which the I/O access command arrives.

Step A13: An error response or an interrupt is returned from the PCI-ex bridge 21 to the server 10 through the PCI-ex bus 50.

Step A14: A fault analysis (error analysis) is performed by the OS of the server 10 and a notification of a result of the fault analysis is issued to the system controlling apparatus 40 through the LAN 80 [corresponding to steps S14 and S15 of FIG. 3].

Step A15: By the system controlling apparatus 40, a notification of the fault analysis result issued from the server 10 and indicating that a fault has occurred in the PCI-ex card 31 is issued to the operator and logging of the fault analysis result into the memory 42 is performed [corresponding to step S15 of FIG. 3].

Step A16: The person in charge of maintenance (operator) would refer to the fault analysis result issued from the system controlling apparatus 40 or the log stored in the memory 42 to decide and replace the PCI-ex card 31 (or the device 30) in which a fault has occurred.

In this manner, when a fault occurs in the PCI-ex card 31, there is the possibility that the fault may be detected also by the system controlling apparatus 40 side. In the present embodiment, when a fault is detected by the system controlling apparatus 40 side, a result of the fault analysis obtained on the system controlling apparatus 40 side is used in priority to another result of the fault analysis obtained by the server 10 side and error reporting to the operator is performed. FIG. 7 is a flow chart illustrating operation/procedure (steps A21 to A26) relating to the I2C controller 23 and the system controlling apparatus 40 in such a case as just described.

Step A21: An interrupt from the PCI-ex card 31 to the I2C controller 23 occurs together with occurrence of a fault in the PCI-ex card 31. The fault notification unit 231 extracts register information (error information) of the PCI-ex card 31 through the I2C bus 25 in response to the interrupt and accumulates the extracted information into the nonvolatile memory 233 [corresponding to steps S22 and S23 of FIG. 4].

Step A22: The fault notification unit 231 issues a notification of an error to the system controlling apparatus 40 through the I2C bus (system controlling bus) 60 [corresponding to step S24 of FIG. 4].

Step A23: The system controlling apparatus 40 (CPU 41) extracts error information stored in the nonvolatile memory 233 through the I2C bus 60 in response to the error notification [corresponding to step S33 of FIG. 5].

Step A24: The system controlling apparatus 40 performs a fault analysis (error analysis) based on the extracted error information [corresponding to step S34 of FIG. 5].

Step A25: The system controlling apparatus 40 issues a notification of a result of the fault analysis to the operator and performs logging of the fault analysis result into the memory 42 [corresponding to step S35 of FIG. 5] .

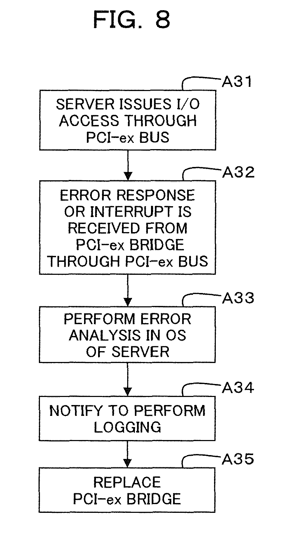

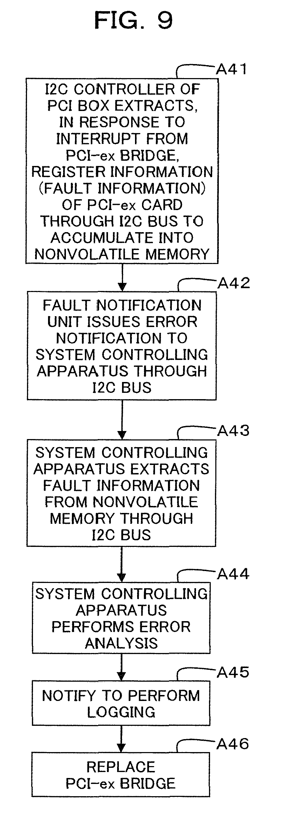

StepA26: The person in charge of maintenance (operator) would refer to the fault analysis result issued from the system controlling apparatus 40 or the log stored in the memory 42 to decide and replace the PCI-ex card 31 (or the device 30) in which a fault has occurred.
[3-2] Now, a particular maintenance work procedure where an error response or an interrupt is returned from the PCI box 20 side when the server 10 performs an I/O access and a fault occurring location (suspect location) is the PCI-ex bridge 21 is described with reference to FIGS. 8 and 9.

FIG. 8 is a flow chart illustrating operation/procedure (steps A31 to A35) relating to the server 10, and illustrates operation/procedure when a result of a fault analysis performed based on fault information in the nonvolatile memory 233 is not acquired but a result of another fault analysis in the server 10 is acquired on the system controlling apparatus 40 side.

Step A31: If the OS operating in the server 10 issues an I/O access, then an I/O access command is issued through the PCI-ex bus 50 in accordance with the issuance of the I/O access.

Step A32: Since a fault occurs in the PCI-ex bridge 21, an error is recognized in the PCI-ex bridge 21 at which the I/O access command arrives. Then, in accordance with this, an error response or an interrupt is returned from the PCI-ex bridge 21 to the server 10 through the PCI-ex bus 50.

Step A33: Fault analysis (error analysis) is performed by the OS of the server 10 and a notification of a result of the fault analysis is issued to the system controlling apparatus 40 through the LAN 80 [corresponding to steps S14 and S15 of FIG. 3].

Step A34: By the system controlling apparatus 40, a notification of the fault analysis result indicating that the fault occurs in the PCI-ex bridge 21 and issued from the server 10 is issued to the operator and logging of the fault analysis result into the memory 42 is performed [corresponding to step S15 of FIG. 3].

Step A35: The person in charge of maintenance (operator) would refer to the fault analysis result issued from the system controlling apparatus 40 or the log stored in the memory 42 to decide and replace the PCI-ex bridge 21 in which a fault occurs.

In this manner, where a fault occurs in the PCI-ex bridge 21, there is the possibility that a fault may be detected also on the system controlling apparatus 40 side. In the present embodiment, where a fault is detected on the system controlling apparatus 40 side, a result of the fault analysis obtained on the system controlling apparatus 40 side is used in priority to a result of another fault analysis obtained on the server 10 side, and error reporting to the operator is performed. FIG. 9 is a flow chart illustrating operation/procedure (steps A41 to A46) relating to the I2C controller 23 and the system controlling apparatus 40 in such a case as just described.

Step A41: An interrupt from the PCI-ex bridge 21 to the I2C controller 23 occurs together with occurrence of a fault in the PCI-ex bridge 21. The fault notification unit 231 extracts register information (error information) of the PCI-ex card 31 through the I2C bus 24 in response to the interrupt and accumulates the extracted information into the nonvolatile memory 233 [corresponding to steps S22 and S23 of FIG. 4].

Step A42: The fault notification unit 231 issues a notification of an error to the system controlling apparatus 40 through the I2C bus (system controlling bus) 60 [corresponding to step S24 of FIG. 4].

Step A43: The system controlling apparatus 40 (CPU 41) extracts the error information stored in the nonvolatile memory 233 through the I2C bus 60 in response to the error notification [corresponding to step S33 of FIG. 5].

Step A44 : The system controlling apparatus 40 performs a fault analysis based on the extracted error information [corresponding to step S34 of FIG. 5].

Step A45: The system controlling apparatus 40 issues a notification of a result of the fault analysis to the operator and logs the fault analysis result into the memory 42 [corresponding to step S35 of FIG. 5].

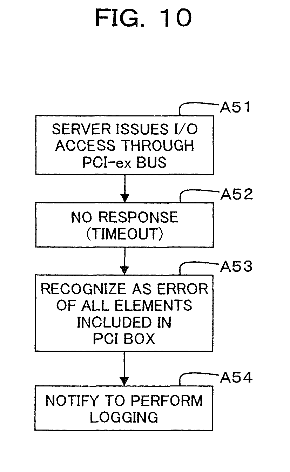

StepA46: The person in charge of maintenance (operator) would refer to the fault analysis result issued from the system controlling apparatus 40 or the log stored in the memory 42 to decide and replace the PCI-ex bridge 21 in which a fault has occurred.
[3-3] Now, a particular maintenance work procedure where no response is received from the PCI box 20 side and timeout occurs when the server 10 performs an I/O access and the fault occurring location (suspect location) is the PCI-ex card 31 is described hereinabove with reference to FIGS. 10 and 7. FIG. 10 is a flow chart illustrating operation/procedure (steps A51 to A54) relating to the server 10 in such a case as just described.

Step A51: If an OS operating in the server 10 issues an I/O access, then an I/O access command is issued through the PCI-ex bus 50 in accordance with the issuance of the I/O access.

Step A52: No response is received from the PCI box 20 side and timeout occurs.

Step A53: All components included in the PCI box 20 are recognized as suspect locations by the OS of the server 10 and a notification of a result of the recognition is issued to the system controlling apparatus 40 through the LAN 80 [corresponding to step S17 of FIG. 3].

Step A54: By the system controlling apparatus 40, a notification of the recognition result issued from the server 10 is issued to the operator and logging of the recognition result into the memory 42 is performed [corresponding to step S18 of FIG. 3].

The person in charge of maintenance (operator) who refers to such a recognition result as described above would replace the entire PCI box 20 with a new one although a fault has actually occurred in the PCI-ex card 31 in the PCI box 20 and it is necessary to replace only the fault PCI-ex card 31.

Detailed fault information (error information) is required in order to identify a suspect location. Therefore, in the present embodiment, when a fault is detected by the system controlling apparatus 4 0 side, error reporting to the operator is performed giving priority to the result of the fault analysis obtained by the system controlling apparatus 40 rather than the result of the fault analysis obtained by the server 10. At this time, operation/procedure (steps A21 to A26) similar to those depicted in FIG. 7 are executed.

Step A21: An interrupt from the PCI-ex card 31 to the I2C controller 23 occurs together with occurrence of a fault in the PCI-ex card 31. The fault notification unit 231 extracts register information (error information) of the PCI-ex card 31 through the I2C bus 25 in response to the interrupt and accumulates the extracted information into the nonvolatile memory 233 [corresponding to steps S22 and S23 of FIG. 4].

Step A22: The fault notification unit 231 issues a notification of an error to the system controlling apparatus 40 through the I2C bus (system controlling bus) 60 [corresponding to step S24 of FIG. 4].

Step A23: The system controlling apparatus 40 (CPU 41) extracts error information stored in the nonvolatile memory 233 through the I2C bus 60 in response to the error notification [corresponding to step S33 of FIG. 5].

Step A24 : The system controlling apparatus 40 performs a fault analysis based on the extracted error information [corresponding to step S34 of FIG. 5].

Step A25: The system controlling apparatus 40 issues a notification of a result of the fault analysis to the operator and performs logging of the fault analysis result into the memory 42 [corresponding to step S35 of FIG. 5] .

StepA26: The person in charge of maintenance (operator) would refer to the fault analysis result issued from the system controlling apparatus 40 or the log stored in the memory 42 to decide and replace the PCI-ex card 31 in which a fault has occurred.
[3-4] Now, a particular maintenance work procedure when no response is received from the PCI box 20 side and timeout occurs when the server 10 performs an I/O access and the fault occurring location (fault location) is the PCI-ex bridge 21 is described with reference to FIGS. 10 and 9. Also in this instance, operation /procedure (steps A51 to A54) similar to those depicted in FIG. 10 are executed in the server 10.

Step A51: If an OS operating in the server 10 issues an I/O access, then an I/O access command is issued through the PCI-ex bus 50 in accordance with the issuance of the I/O access.

Step A52: No response is received from the PCI box 20 side and timeout occurs.

Step A53: All components included in the PCI box 20 are recognized as suspect locations by the OS of the server 10 and a notification of a result of the recognition is issued to the system controlling apparatus 40 through the LAN 80 [corresponding to step S17 of FIG. 3].

Step A54: By the system controlling apparatus 40, a notification of the recognition result issued from the server 10 is issued to the operator and logging of the recognition result into the memory 42 is performed [corresponding to step S18 of FIG. 3].

The person in charge of maintenance (operator) who refers to such a recognition result as just described would replace the entire PCI box 20 although a fault has actually occurred in the PCI-ex bridge 21 in the PCI box 20 and it is necessary to replace only the fault PCI-ex bridge 21.

Detailed fault information (error information) is required in order to identify a suspect location. Therefore, in the present embodiment, when a fault is detected by the system controlling apparatus 40 side, error reporting to the operator is performed giving priority to the result of the fault analysis obtained by the system controlling apparatus 40 rather than the result of the fault analysis obtained by the server 10. At this time, operation/procedure (steps A41 to A46) similar to those depicted in FIG. 9 are executed.

Step A41: An interrupt from the PCI-ex bridge 21 to the I2C controller 23 occurs together with occurrence of a fault in the PCI-ex bridge 21. The fault notification unit 231 extracts register information (error information) of the PCI-ex card 31 through the I2C bus 24 in response to the interrupt and accumulates the extracted information into the nonvolatile memory 233 [corresponding to steps S22 and S23 of FIG. 4].

Step A42: The fault notification unit 231 issues a notification of an error to the system controlling apparatus 40 through the I2C bus (system controlling bus) 60 [corresponding to step S24 of FIG. 4].

Step A43: The system controlling apparatus 40 (CPU 41) extracts error information stored in the nonvolatile memory 233 through the I2C bus 60 in response to the error notification [corresponding to step S33 of FIG. 5].

Step A44: The system controlling apparatus 40 performs a fault analysis (error analysis) based on the extracted error information [corresponding to step S34 of FIG. 5].

Step A45: The system controlling apparatus 40 issues a notification of a result of the fault analysis to the operator and performs logging of the fault analysis result into the memory 42 [corresponding to step S35 of FIG. 5] .

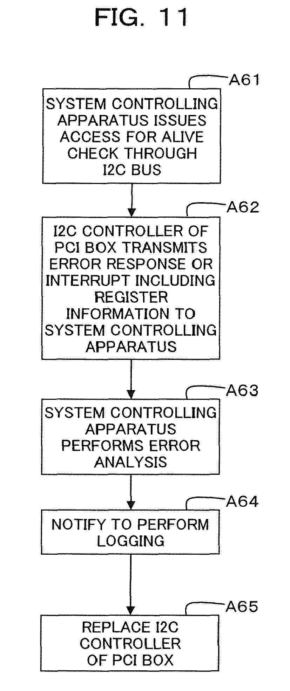

StepA46: The person in charge of maintenance (operator) would refer to the fault analysis result issued from the system controlling apparatus 40 or the log stored in the memory 42 to decide and replace the PCI-ex bridge 21 in which a fault has occurred.
[3-5] A particular maintenance work procedure when an error response or an interrupt is returned from the I2C controller 23 when the system controlling apparatus 40 performs an access for an alive check to the I2C controller 23 of the PCI box 20 is described with reference to FIG. 11. FIG. 11 is a flow chart illustrating operation/procedure (steps A61 to A65) relating to the system controlling apparatus 40 and the I2C controller 23 in such a case as just described.

Step A61: The system controlling apparatus 40 (CPU 41) issues an access for an alive check to the I2C controller 23 of the PCI box 20 through the I2C bus 60.

Step A62: The I2C controller 23 transmits, in response to the access for an alive check, an error response or an interrupt including register information (error information) to the system controlling apparatus 40 through the I2Cbus 60 [corresponding to step S29 of FIG. 4].

Step A63: If the error information is received, then the system controlling apparatus 40 performs a fault analysis based on the received error information [corresponding to step S43 of FIG. 5].

Step A64: The system controlling apparatus 40 issues a notification of a result of the fault analysis to the operator and performs logging of the fault analysis result into the memory 42 [corresponding to step S44 of FIG. 5] .

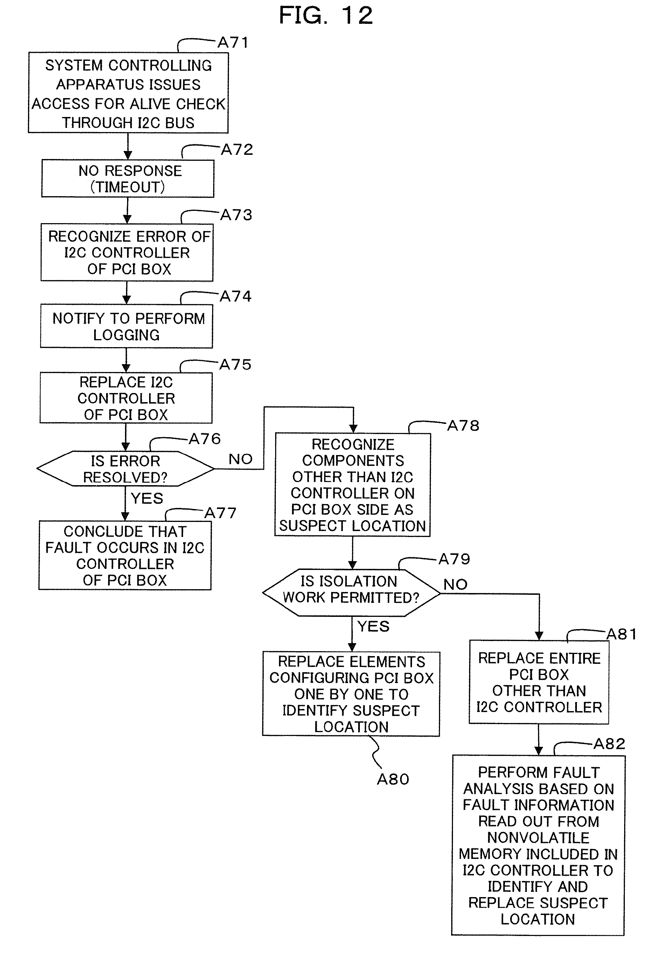

StepA65: The person in charge of maintenance (operator) would refer to the fault analysis result issued from the system controlling apparatus 40 or the log stored in the memory 42 to decide and replace the I2C controller 23 in which a fault has occurred.
[3-6] A particular maintenance work procedure when no response is received from the I2C controller 23 side and timeout occurs when the system controlling apparatus 40 performs an access for an alive check to the I2C controller 23 of the PCI box 20 is described with reference to FIG. 12. FIG. 12 is a flow chart illustrating operation/procedure (steps A71 to A82) relating to the system controlling apparatus 40 in such a case as just described.

Step A71: The system controlling apparatus 40 (CPU 41) issues an access for an alive check to the I2C controller 23 of the PCI box 20 through the I2C bus 60.

StepA72 : No response is received from the I2C controller 23 side of the PCI box 20 and timeout occurs.

Step A73: The system controlling apparatus 40 recognizes all components included in the I2C controller 23 of the PCI box 20 as suspect locations [corresponding to step S46 of FIG. 5].

Step A74: The system controlling apparatus 40 issues a notification of a result of the recognition to the operator and performs logging of the recognition result into the memory 42 [corresponding to step S47 of FIG. 5]

Step A75: The person in charge of maintenance (operator) would refer to the recognition result issued from the system controlling apparatus 40 or the log stored in the memory 42 to decide and replace the I2C controller 23 in which a fault has occurred.

Step A76: The system controlling apparatus 40 or the person in charge of maintenance decides whether or not the fault is resolved by the replacement at step A75 [corresponding to step S48 of FIG. 5].

Step A77: If the fault is resolved (YES route at step S76), then the system controlling apparatus 40 determines the I2C controller 23 as a suspect location, and issues a notification of the fact to the person in charge of maintenance and performs logging of the effect into the memory 42. Thereafter, the processing is ended. Also the maintenance work by the person in charge of maintenance is completed [corresponding to steps S49 and S50 of FIG. 5].

Step A78: If the fault is not resolved (NO route at step S76), then the system controlling apparatus 40 recognizes all components on the PCI box 20 side except for the I2C controller 23 as suspect locations, and issues a notification of a result of the recognition to the person in charge of maintenance and performs logging of the recognition result into the memory 42 [corresponding to steps S51 and S52 of FIG. 5].

Step A79 : The person in charge of maintenance who refers to the substance of the notification or the log would confirm whether or not isolation work of the components configuring the PCI box 20 is permitted while the PCI box 20 remains connected to the system (server 10).

Step A80: If the isolation work is permitted (YES route at step A79), then the person in charge of maintenance would replace the components configuring the PCI box 20 one by one and confirm whether or not the fault is resolved by the replacement thereby to identify a suspect location. If a suspect location is identified by such work as just described and the fault is resolved by replacement of the element of the suspect location, then the maintenance work by the person in charge of maintenance is completed.

Step A81: The isolation work may not be permitted by circumferences of the customer. At this time (NO route at step A79), the person in charge of maintenance would replace all components of the PCI box 20 except for the I2C controller 23 with a new PCI box 20.

Step A82: After the replacement of the PCI box 20, the person in charge of maintenance would transmit the PCI box 20 from which identification of a suspect location has failed to a factory and a fault reproduction experiment of the PCI box 20 from which identification of a suspect location has failed is performed. At this time, the fault information accumulated in the nonvolatile memory 233 included in the I2C controller 23 is read out and a suspect location in the PCI box 20 is identified based on the read out fault information. Then, the part (element) of the identified suspect location is replaced with a new part. If the fault is resolved by the replacement work, then the maintenance work by the person in charge of maintenance is completed.

### [4] Effect of the Information Processing Apparatus of the Embodiment

In the existing technique, there is the possibility that, when a notification of fault information or the like is issued to the system controlling apparatus 40, which corresponds to a maintenance diagnosis apparatus, through a path different from the PCI-ex bus 50, if the different path is configured from a low-speedbus such as, for example, an I2C bus, then when a plurality of faults occur, the fault information may be partly lost without being transmitted fully.

On the other hand, with the information processing apparatus 1 of the present embodiment, since details of fault information are accumulated into the nonvolatile memory 233 where a fault occurs, the fault information is stored with certainty into the nonvolatile memory 233 without losing the fault information irrespective of an on/off state of the power supply. Then, if an error notification is issued to the system controlling apparatus 40 through the I2C bus (second bus) 60, then the system controlling apparatus 40 successively reads out the fault information from the nonvolatile memory 233.

Accordingly, it is possible to acquire fault information of the PCI-ex bridge 21 or a PCI-ex card 31 (device 30) in the PCI box 20 with certainty, identify a suspect location with high accuracy and perform replacement with a new part to resolve the fault. Consequently, in the maintenance work, replacement of the entire PCI box 20 can be avoided as far as possible, and accurate maintenance by identification of a suspect location (suspect part) can be achieved. Thus, effective maintenance work and reduction of a maintenance and part cost can be implemented.

Further, since the I2C bus 60 is a low-speed path, there is the possibility that, if the system controlling apparatus 40 tries to collect error information from the PCI-ex card 31 through the I2C bus 60, then the maintenance work may not be completed within an actual execution time period. On the other hand, in the present embodiment, since error information is accumulated and stored into the nonvolatile memory 233 also in a case in which the maintenance work cannot be performed within an actual execution time period, a fault analysis can be performed with certainty to identify a suspect location and then a notification of the identified suspect location can be issued.

Further, by accumulating fault information into the nonvolatile memory 233, a collection process of fault information and a notification process of the fault information to the system controlling apparatus 40 can be performed separately from each other, and also increase of the speed of the process can be implemented.

On the other hand, the I2C bus (second bus) 60 which is an access path different from the PCI-ex bus 50 is provided and is used as a path for collection of fault information from the PCI box 20 to the system controlling apparatus 40. In such a case as just described, if the I2C bus 60 or the I2C controller 23 fails, then there is the possibility that fault information may not be transmitted from the I2C controller 23 to the system controlling apparatus 40 and a suspect location may not be able to be identified. In contrast, in the present embodiment, by the maintenance work procedure described above with reference to FIGS. 11 and 12, a fault occurrence location in the I2C controller 23 can be identified to perform maintenance.

Further, in the present embodiment, when a fault is detected by the system controlling apparatus 40 side, priority is given to a fault analysis result obtained by the system controlling apparatus 40 side rather than to a fault analysis result obtained by the server 10 side to perform error reporting to the operator. Consequently, the operator can refer to the fault analysis result, in which a suspect location is identifiedbasedon the detailed fault information, obtained by the system controlling apparatus 40 side to perform maintenance work. In short, replacement only of a part corresponding to the suspect location can be performed without replacing the entire PCI box 20, and efficient maintenance work and reduction of the maintenance and part cost can be implemented.

### [Others]

Although the preferred embodiment of the present invention is described in detail above, the present invention is not limited to the particular embodiment but can be carried out in various modified or altered forms without departing from the subject matter of the present invention.

In the embodiment described above, the PCI-ex bus is used as the first bus, and the I2C bus is used as the second bus (system controlling bus). However, the present invention is not limited to this, but some other buses may be used. For example, as the second bus, an SM (System Management) bus may be used.

## Claims

1. An information processing apparatus, comprising:
a processing apparatus (10);
a bus bridge (21) connected to the processing apparatus (10) through a first bus (50) and connecting to a peripheral apparatus (31, 30);
a nonvolatile storage apparatus (233) that stores information relating to a fault occurring in the peripheral apparatus or the bus bridge;
a monitoring apparatus (40) connected to the nonvolatile storage apparatus (233) through a second bus (60) different from the first bus(50) and monitoring a system including the processing apparatus; and
a fault notification unit (23, 231) that stores, when the fault occurs in the peripheral apparatus or the bus bridge, the information relating to the occurring fault into the nonvolatile storage apparatus (233) and issues a notification of an error to the monitoring apparatus (40) through the second bus (60).

2. The information processing apparatus according to claim 1, wherein, when a first response or a first interrupt indicating that the fault occurs is received from the peripheral apparatus or the bus bridge, the fault notification unit (231) reads out the information relating to the fault from the peripheral apparatus or the bus bridge, and stores the read-out information into the nonvolatile storage apparatus (233).

3. The information processing apparatus according to claim 1 or claim 2, wherein, when the notification of the error is received from the fault notification unit (23), the monitoring apparatus (40) reads out the information relating to the fault from the nonvolatile storage apparatus (233) through the second bus, performs a first fault analysis based on the read-out information relating to the fault, and then issues a notification of a result of the first fault analysis.

4. The information processing apparatus according to claim 3, wherein, when a second response or a second interrupt indicating that the fault occurs in the peripheral apparatus or the bus bridge is received through the first bus upon an access of the processing apparatus (10) to the peripheral apparatus, the processing apparatus performs a second fault analysis based on information included in the second response or the second interrupt, and issues a notification of a result of the second fault analysis to the monitoring apparatus (40); and
when both of the result of the first fault analysis and the result of the second fault analysis are obtained, the monitoring apparatus (40) issues a notification of the result of the first fault analysis in priority.

5. The information processing apparatus according to claim 3, wherein, when no response is received from the first bus upon an access of the processing apparatus (10) to the peripheral apparatus, the monitoring apparatus (40) reads out the information relating to the fault from the nonvolatile storage apparatus through the second bus (60), and performs the first fault analysis based on the read-out information relating to the fault, and then issues a notification of the result of the first fault analysis.

6. The information processing apparatus according to any one of claims 1-5, wherein, when error information indicating that fault occurs is received from the fault notification unit (23) upon an access of the monitoring apparatus (40) to the fault notification unit (23), the monitoring apparatus (40) performs a third fault analysis based on the error information, and issues a notification of a result of the third fault analysis.

7. The information processing apparatus according to any one of claims 1-5, wherein, when no response is received from the fault notification unit (23) upon an access of the monitoring apparatus (23) to the fault notification unit, the monitoring apparatus recognizes that a fault occurs in the fault notification unit (23), and issues a notification of this fact.

8. The information processing apparatus according to claim 7, wherein, when the fault is resolved by replacing the fault notification unit (23) with a new fault notification unit after the notification of the fact that the fault occurs in the fault notification unit (23), the monitoring apparatus (40) concludes the fault notification unit (23) as a suspect location.

9. The information processing apparatus according to claim 7, wherein, when the fault is not resolvedby replacing the fault notification unit (23) with a new fault notification unit after the notification of the fact that the fault occurs in the fault notification unit (23), the monitoring apparatus (40) recognizes a component, which includes the peripheral apparatus and the bus bridge and which is connected to the fault notification unit (23), as a suspect location, and issues a notification of this fact.

10. A fault processing method for an information processing apparatus including a processing apparatus (10), a bus bridge (21) connected to the processing apparatus through a first bus (50) and connecting to a peripheral apparatus (31, 30), a nonvolatile storage apparatus (233) that stores information relating to a fault occurring in the peripheral apparatus or the bus bridge, a monitoring apparatus (40) connected to the nonvolatile storage apparatus (233) through a second bus (60) different from the first bus (50) and monitoring a system including the processing apparatus, and a fault notification unit, the method comprising:
when the fault occurs in the peripheral apparatus or the bus bridge, storing, by the fault notification unit (23, 231), information relating to the occurring fault into the nonvolatile storage apparatus (233); and
issuing, by the fault notification unit (23, 231), a notification of an error to the monitoring apparatus (40) through the second bus (60).

11. The fault processing method according to claim 10, the method further comprising,
when a first response or a first interrupt indicating that the fault occurs is received from the peripheral apparatus or the bus bridge, reading out, by the fault notification unit (231), the information relating to the fault from the peripheral apparatus or the bus bridge, and
storing, by the fault notification unit (231), the read-out information into the nonvolatile storage apparatus (233).

12. The fault processing method according to claim 10 or claim 11, the method further comprising,
when the notification of the error is received from the fault notification unit (23), reading out, by the monitoring apparatus (40), the information relating to the fault from the nonvolatile storage apparatus (233) through the second bus (60),
performing, by the monitoring apparatus (40), a first fault analysis based on the read-out information relating to the fault, and
issuing, by the monitoring apparatus (40), a notification of a result of the first fault analysis.

13. The fault processing method according to claim 12, the method further comprising,
when a second response or a second interrupt indicating that the fault occurs in the peripheral apparatus or the bus bridge is received through the first bus upon an access of the processing apparatus (10) to the peripheral apparatus, performing, by the processing apparatus (10), a second fault analysis based on information included in the second response or the second interrupt,
issuing, by the processing apparatus (10), a notification of a result of the second fault analysis to the monitoring apparatus (40); and
when both of the result of the first fault analysis and the result of the second fault analysis are obtained, issuing, by the monitoring apparatus (40), a notification of the result of the first fault analysis in priority.

14. The fault processing method according to claim 12, the method further comprising,
when no response is received from the first bus upon an access of the processing apparatus (10) to the peripheral apparatus, reading out, by the monitoring apparatus (40), the information relating to the fault from the nonvolatile storage apparatus (233) through the second bus (60),
performing, by the monitoring apparatus (40), the first fault analysis based on the read-out information relating to the fault, and
issuing, by the monitoring apparatus (40), a notification of the result of the first fault analysis.

15. The fault processing method according to any one of claims 10-14, the method further comprising,
when error information indicating that fault occurs is received from the fault notification unit (23) upon an access of the monitoring apparatus (40) to the fault notification unit (23), performing, by the monitoring apparatus (40), a third fault analysis based on the error information, and
issuing, by the monitoring apparatus (40), a notification of a result of the third fault analysis.

16. The fault processing method according to any one of claims 10-14, the method further comprising,
when no response is received from the fault notification unit upon an access of the monitoring apparatus (40) to the fault notification unit (23), recognizing, by the monitoring apparatus (40), that a fault occurs in the fault notification unit (23), and
issuing, by the monitoring apparatus (40), a notification of this fact.

17. The fault processing method according to claim 16, the method further comprising,
when the fault is resolved by replacing the fault notification unit (23) with a new fault notification unit after the notification of the fact that the fault occurs in the fault notification unit (23), concluding, by the monitoring apparatus (40), the fault notification unit (23) as a suspect location.

18. The fault processing method according to claim 16, the method further comprising,
when the fault is not resolved by replacing the fault notification unit (23) with a new fault notification unit after the notification of the fact that the fault occurs in the fault notification unit (23), recognizing, by the monitoring apparatus (40), a component, which includes the peripheral apparatus and the bus bridge and which is connected to the fault notification unit (23), as a suspect location, and
issuing, by the monitoring apparatus(40), a notification of this fact.

19. The fault processing method according to claim 18, the method further comprising, replacing the component with a new component in response to the notification of the fact that the component is a suspect location.

20. The fault processing method according to claim 18, the method further comprising,
identifying the suspect location in the component based on the information relating to the fault and stored in the nonvolatile storage apparatus, and
replacing a part relating to the identified suspect location in the component with a new part.
